# FASCICULE DE BREVET EUROPEEN

(11) **EP 3 263 462 B1**
(45) Date de publication et mention de la délivrance du brevet: **02.01.2019**
(21) Numéro de dépôt: 17175651.3
(22) Date de dépôt: 13.06.2017
(51) Int. Cl.: B64D 43/00, B64C 27/00

(54) **DISPOSITIF INDICATEUR DE MARGE DE PUISSANCE POUR GIRAVION, GIRAVION ASSOCIE ET PROCEDE CORRESPONDANT**
ANZEIGEVORRICHTUNG DER LEISTUNGSBANDBREITE FÜR EIN DREHFLÜGELFLUGZEUG, ENTSPRECHENDES DREHFLÜGELFLUGZEUG UND ENTSPRECHENDES VERFAHREN
A POWER MARGIN INDICATOR DEVICE FOR A ROTORCRAFT, AN ASSOCIATED ROTORCRAFT AND A CORRESPONDING METHOD

(30) Priorité: 01.07.2016 FR 1601044
(43) Date de publication de la demande: 03.01.2018
(73) Titulaire: Airbus Helicopters, 13725 Marignane Cedex (FR)
(72) Inventeur: ABBAS, Grégory, 13012 MARSEILLE (FR); GAVIOS, Damien, 13190 ALLAUCH (FR)
(74) Mandataire: GPI & Associés

(56) Documents cités:
- CN-A- 105 416 601
- FR-A1- 2 756 256
- FR-A1- 2 973 340
- US-A1- 2013 054 053

## Description

La présente invention concerne un dispositif pour indiquer une marge de puissance disponible pour tout giravion et notamment pour un hélicoptère.

Généralement pour piloter un giravion, il est nécessaire de surveiller constamment de nombreux instruments agencés sur un tableau de bord permettant notamment d'informer le pilote sur les conditions extérieures du vol et sur certains paramètres de fonctionnement du giravion. De tels paramètres de fonctionnement peuvent notamment concerner un ensemble moteur et/ou une boîte de transmission de puissance principale désignée par la suite "boîte BTP" et se rapporter à la température et/ou la pression de fluides circulant dans ces organes aptes à assurer la sustentation, la propulsion voire la direction de ce giravion.

Par ailleurs pour des raisons physiques, il existe de nombreuses limitations, notamment thermiques, que le pilote doit prendre en compte à chaque instant du vol. Ces différentes limitations dépendent généralement de la phase de vol et des conditions extérieures.

En outre, la grande majorité des giravions sont équipés notamment d'un ou deux turbomoteurs, généralement à turbine libre. La puissance est alors prélevée sur un étage basse pression de la turbine, lequel étage est mécaniquement indépendant de l'ensemble du compresseur et de l'étage haute pression de la turbine. Un turbomoteur tournant entre 30000 et 50000 tours par minute, la boîte de transmission de puissance principale permet de réduire la vitesse de rotation en sortie de l'ensemble moteur pour entraîner en rotation le (ou les) rotor(s) du giravion à la vitesse de rotation NR de l'ordre de 300 à 400 tours par minute.

Ainsi, les limitations thermiques tant du moteur que de la boîte de transmission de puissance principale permettent de définir trois régimes principaux d'utilisation du moteur :
- le régime de décollage utilisable pendant cinq à dix minutes correspondant à un niveau de couple pour la boîte de transmission de puissance principale et à un échauffement pour la turbine du moteur admissibles pendant un temps limité sans dégradation notable : il s'agit de la puissance maximale au décollage (PMD),
- le régime maximal continu pendant lequel, à aucun moment ne sont dépassées les possibilités de la boîte de transmission de puissance principale, ni celles résultant de l'échauffement maximal admissible devant les aubages à haute pression du premier étage de la turbine : il s'agit de la puissance maximale en continu (PMC),
- le régime maximal en fonctionnement transitoire limité à une ou deux dizaines de secondes, protégé parfois par une butée de régulation : il s'agit de la puissance maximale en transitoire (PMT).

Il existe aussi des régimes de surpuissance en urgence sur les appareils multimoteur, utilisés en cas de panne d'un moteur :
- le régime d'urgence pendant lequel les possibilités de la boîte de transmission de puissance principale sur les étages d'entrée et les possibilités thermiques du moteur sont utilisées au maximum : il s'agit de la puissance de super urgence (PSU ou OEI30") utilisable pendant trente secondes consécutives, au maximum, et trois fois pendant un vol. L'utilisation de l'OEI30" entraîne la dépose du moteur du giravion puis une opération de révision totale,
- le régime d'urgence pendant lequel les possibilités de la boîte de transmission sur les étages d'entrée et les possibilités du moteur sont largement utilisées : il s'agit alors de la puissance maximale d'urgence (PMU ou OEI2') utilisable pendant deux minutes après l'OEI30)" ou deux minutes trente secondes consécutives, au maximum,
- le régime d'urgence pendant lequel les possibilités de la boîte de transmission sur les étages d'entrée et les possibilités thermiques du moteur sont utilisées sans endommagement : il s'agit de la puissance intermédiaire d'urgence (PIU ou OEIcont) utilisable de trente minutes à deux heures (selon les moteurs) en continu pour le reste du vol après la panne du moteur.

Le motoriste établit, par calculs ou par essais, les courbes de puissance disponible d'un turbomoteur en fonction de l'altitude et de la température, et cela pour chacun des six régimes définis ci-dessus.

Les limitations indiquées sont généralement surveillées par l'intermédiaire de trois paramètres de fonctionnement du giravion, à savoir la vitesse de rotation du générateur de gaz (NG) d'un turbomoteur, le couple (TQ) mesuré au niveau du moteur (TQ1) et/ou en entrée de la boîte BTP (TQ2) et la température d'éjection des gaz à l'entrée de turbine libre (T4).

En outre, il est alors connu et tel que décrit par la Demanderesse dans les documents FR 2 756 256 et FR 2 973 340 ou encore dans les documents US 2013/054053 et CN 105 416 601 d'utiliser ces différents paramètres pour mettre en oeuvre des indicateurs de marge de puissance, permettant au(x) pilote(s) de disposer d'une indication synthétique des marges de puissance, remplaçant plusieurs indicateurs classiques en général dispersés sur le tableau de bord.

Pour simplifier la charge de travail du pilote, les dispositifs indicateurs de marge de puissance, également désignés par les acronymes "IPL" en langue française, pour Instrument de Première Limitation, ou "FLI" en langue anglaise, pour Fist Limitation Indicator, comportent un écran de visualisation permettant l'affichage de la limitation identifiée comme étant la plus contraignante. Cependant, un tel concept a été créé pour des giravions mettant en oeuvre une loi de variation de la vitesse de rotation du rotor principal, dite "vitesse NR" ou "régime NR", peu variable.

En outre, le rôle d'un dispositif IPL est de fournir au pilote ou à son copilote une indication de marge de puissance convertie en une marge de pas collectif des pales du giravion. Dans un premier temps, le dispositif IPL détermine la marge de puissance du moteur à partir des paramètres de fonctionnement (NG, T4, TQ1) et la marge de puissance de la boîte BTP (TQ2), dans un second temps il convertit cette marge de puissance en une marge équivalente de pas collectif des pales du rotor.

Sur l'écran de visualisation du dispositif IPL, un index de pas collectif peut ainsi être représenté de manière fixe pour indiquer le pas collectif courant des pales du rotor. Un tel index est par ailleurs localisé à l'intérieur d'un bandeau mobile qui défile devant cet index de pas collectif. Les limitations sont quant à elles représentées à l'aide d'un marquage mobile sur le bandeau, tels des traits ou des points se déplaçant le long du bandeau.

L'utilisation d'un dispositif IPL par le pilote ou son copilote est très simple. Tant que la position de l'index sur l'écran de visualisation est en dessous d'une limitation, celle-ci ne pourra être dépassée sans une nouvelle action du pilote sur un organe de commande, tel un manche de pas collectif des pales du rotor.

Cependant sur les derniers modèles de giravion actuellement commercialisés ou en cours de développement, la loi de commande de la vitesse NR n'est plus fixe ou faiblement variable autour d'une valeur nominale NRnom de fonctionnement de 100%. De telles lois de commande de la vitesse NR sont désormais très dynamiques en variant par exemple d'un écart de plus ou moins 10% par rapport à la valeur nominale NRnom.

Or il est connu que la puissance du moteur correspond au produit du couple moteur par la vitesse de rotation NTL de la turbine libre. Or, la vitesse de rotation NTL est proportionnelle à la vitesse de rotation NR du rotor, comme vu précédemment. Ainsi, pour une demande de puissance constante, correspondant par exemple à une position figée de l'organe de commande du pas collectif, si la vitesse NR augmente le couple moteur baisse et inversement.

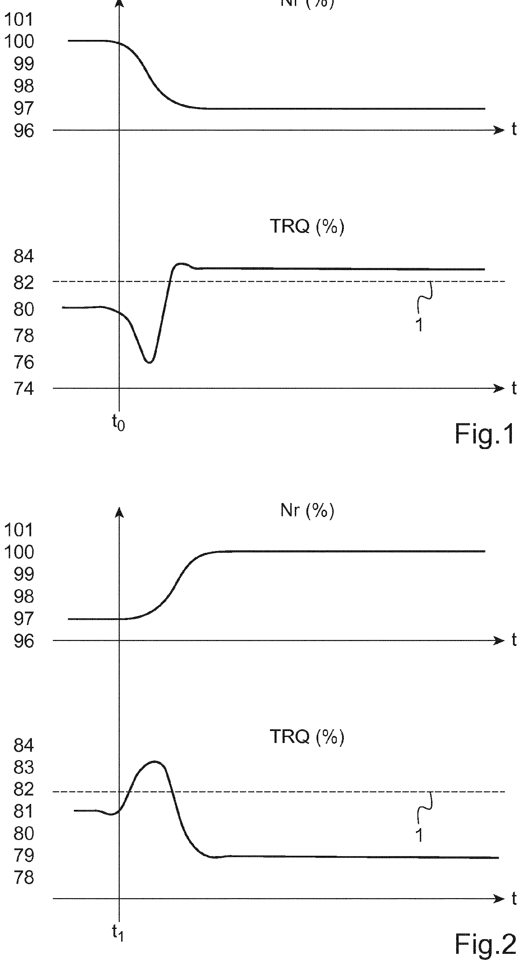

Ainsi, selon les dispositifs IPL correspondant à l'art antérieur et tel que représenté à la figure 1, si un giravion par exemple se rapproche d'une montagne son altitude relative par rapport au sol peut décroitre et lorsque à un instant t₀ cette altitude relative passe à moins de 800 pieds, une loi de commande de la vitesse NR s'active automatiquement pour des raisons acoustiques. Une telle loi de commande dite "acoustique" modifie alors à la baisse la vitesse NR à par exemple environ 97% de la valeur nominale NRnom. Transitoirement pour freiner le rotor, le couple baisse également.

Ensuite sans action sur l'organe de commande du pas collectif, le couple moteur se stabilise à une valeur plus haute qu'initialement lorsque l'altitude relative du giravion était supérieure à 800 pieds puisque la puissance motrice reste constante.

Comme transitoirement le couple baisse par exemple à 76%, la marge disponible en couple affichée sur l'écran de visualisation du dispositif IPL augmente et les limites montent sur cet écran de visualisation. Ensuite inversement, le couple augmente donc la marge disponible en couple est plus faible et la limite descend sur l'écran de visualisation. Or dans l'exemple illustré à la figure 1, la limite de PMC étant à 82 %, le pilote peut, sans aucune action sur l'organe de commande de pas collectif, se retrouver à avoir dépassé la limite indiquée sur l'écran de visualisation du dispositif IPL. Un tel comportement est alors incohérent avec le principe même d'un dispositif IPL.

De même tel que représenté à la figure 2, lorsque un giravion équipé d'un dispositif selon l'art antérieur s'éloigne d'une montagne, son altitude relative par rapport au sol peut croître pour atteindre à un instant t₁ une altitude supérieure à 1000 pieds. Dans ce cas, la loi de commande acoustique de la vitesse NR se désactive automatiquement car il n'y a alors plus de contrainte acoustique. La nouvelle loi de commande modifie alors à la hausse la vitesse NR. La vitesse NR peut alors remonter à 100% de la valeur nominale NRnom. Transitoirement pour accélérer le rotor, le couple augmente puis ce couple se stabilise à une valeur plus basse qu'initialement lorsque le giravion était à une altitude relative inférieure à 1000 pieds.

Comme transitoirement le couple augmente par exemple à 83%, la marge disponible en couple affichée sur l'écran de visualisation du dispositif IPL baisse et les limites descendent sur cet écran de visualisation. Ensuite comme précédemment, la limite PMC étant à 82 %, le pilote peut, sans aucune action sur l'organe de commande de pas collectif, se retrouver à avoir dépassé transitoirement la limite indiquée sur l'écran de visualisation du dispositif IPL. Un tel comportement est alors incohérent avec le principe même d'un dispositif IPL.

Ensuite inversement, le couple baisse donc la marge disponible en couple augmente et la limite monte sur l'écran de visualisation du dispositif IPL.

La présente invention a alors pour objet de proposer un dispositif IPL permettant de s'affranchir des limitations mentionnées ci-dessus. Ce dispositif IPL doit ainsi permettre de prédire une marge de puissance pour une plage prédéterminée et usuelle de vitesses de rotation NR et non uniquement pour la valeur courante de la vitesse de rotation NR.

L'invention concerne donc un dispositif indicateur de marge de puissance, étant un instrument de première limitation IPL, pour un giravion destiné à fournir à un pilote du giravion des informations de marge de puissance disponible sur au moins un moteur et une boîte de transmission de puissance principale BTP du giravion en fonction de conditions de vol. En outre, un tel dispositif comporte :
- des moyens d'entrée pour collecter des données d'entrée correspondant à au moins deux paramètres de fonctionnement distincts du (ou des) moteur(s) et de la boîte de transmission de puissance principale BTP,
- des moyens de calcul connectés aux moyens d'entrée, ces moyen de calcul permettant de :
   - calculer au moins deux marges de puissance en fonction d'une part de valeurs respectives des au moins deux paramètres de fonctionnement et d'autre part de valeurs de limitation pour l'un au moins des régimes d'utilisation correspondant à une puissance maximale au décollage (PMD), une puissance maximale en continu (PMC), une puissance maximale en transitoire (PMT), une puissance de super urgence (PSU ou OEI30"), une puissance maximale d'urgence (PMU ou OEI2') et une puissance intermédiaire d'urgence (PIU ou OEIcont) du (ou des) moteur(s),
   - comparer les au moins deux marges de puissance pour identifier une marge limitative de puissance comme étant la plus petite de ces au moins deux marges de puissance,
   - convertir cette marge limitative de puissance en une marge de pas collectif des pales d'un rotor du giravion,
- des moyens d'affichage présentant, sur un écran de visualisation, cette marge de pas collectif représentée sur une échelle graduée en équivalents de pas collectif dans une fenêtre de l'écran de visualisation et un index représentatif d'un pas collectif courant des pales du rotor.

Selon l'invention, ce dispositif est remarquable en ce que :
- les moyens de calcul sont configurés pour déterminer simultanément pour le(s) régime(s) d'utilisation correspondant à la puissance maximale au décollage (PMD), la puissance maximale en continu (PMC), la puissance maximale en transitoire (PMT), la puissance de super urgence (PSU ou OEI30"), la puissance maximale d'urgence (PMU ou OEI2') et la puissance intermédiaire d'urgence (PIU ou OEIcont) du (ou des) moteur(s) :
   - dans un premier temps, une pluralité de résultats correspondant à la marge de pas collectif des pales du rotor pour une pluralité de valeurs de la vitesse de rotation NR du rotor, cette pluralité de valeurs de la vitesse de rotation NR du rotor formant une plage prédéterminée de valeurs de la vitesse de rotation NR du rotor, et
   - dans un second temps, une pluralité de limites de pas collectif obtenues par une sommation entre le pas collectif courant des pales du rotor avec chacun des résultats de la pluralité de résultats,
- les moyens d'affichage présentent au moins une courbe plane correspondant au(x) régime(s) d'utilisation correspondant à la puissance maximale au décollage (PMD), la puissance maximale en continu (PMC), la puissance maximale en transitoire (PMT), la puissance de super urgence (PSU ou OEI30"), la puissance maximale d'urgence (PMU ou OEI2') et la puissance intermédiaire d'urgence (PIU ou OEIcont) du (ou des) moteur(s), la au moins une courbe plane étant représentative de la pluralité de limites de pas collectif sur la plage prédéterminée de valeurs de la vitesse de rotation NR du rotor, cette au moins une courbe plane étant formée par un ensemble de points présentant en abscisses la vitesse de rotation NR du rotor et en ordonnées une limite de pas collectif correspondante, chacune des au moins une courbe plane étant susceptible de se déplacer au moins suivant un axe des ordonnées par rapport à l'échelle graduée en équivalents de pas collectif et/ou par rapport à l'index représentatif d'un pas collectif courant des pales du rotor.

Autrement dit, les moyens de calcul déterminent en parallèle plusieurs marges de pas collectif des pales du rotor sur une plage de valeurs de la vitesse de rotation NR du rotor. Les moyens de calcul ajoutent ensuite cette marge au pas collectif courant afin d'identifier la ou les limites de pas collectif sur la plage de valeurs de la vitesse de rotation NR.

Les moyens d'affichage d'un tel dispositif IPL permettent alors d'afficher sur l'écran de visualisation les limites exprimées en pas collectif des pales du rotor sous la forme de courbes planes. Ainsi, lorsqu'une loi de commande acoustique s'active ou se désactive automatiquement au passage du giravion à proximité d'une montagne par exemple, le pilote peut alors anticiper le déplacement relatif de l'index par rapport à la courbe plane représentative de la limite positionnée immédiatement au dessus de cet index.

Le pilote (ou le copilote) peut en effet voir sur l'écran de visualisation un rapprochement entre l'index et la limite la plus proche correspondant à un déplacement relatif suivant un axe des abscisses sur l'écran de visualisation. Une telle visualisation du rapprochement de la limite peut alors permettre au pilote d'adapter la consigne de commande générée par l'organe de commande. En pratique, le pilote peut ainsi modifier la position du levier de pas collectif pour anticiper le rapprochement de la courbe plane représentative de la limite de pas collectif.

En outre, les au moins deux paramètres de fonctionnement distincts peuvent être choisis parmi le groupe comportant au moins une vitesse de rotation du générateur de gaz NG du moteur, un premier couple TQ1 mesuré au niveau du moteur, un second couple TQ2 mesuré au niveau d'une entrée de la boîte de transmission de puissance principale BTP et une température d'éjection des gaz T4 mesurée à l'entrée d'une turbine libre du moteur.

En pratique, la plage prédéterminée de valeurs de la vitesse de rotation NR peut être exprimée en pourcentage d'une valeur nominale NRnom de la vitesse de rotation NR.

Par ailleurs, l'écran de visualisation peut également permettre l'affichage d'une valeur courante chiffrée exprimée en pourcentage d'une valeur nominale NRnom de la vitesse de rotation NR.

En outre, la plage prédéterminée de valeurs de la vitesse de rotation NR peut s'étendre entre une vitesse minimale NRmin correspondant à 70% de la valeur nominale NRnom de la vitesse de rotation NR et une vitesse maximale NRmax correspondant à 130% de la valeur nominale NRnom de la vitesse de rotation NR.

Une telle plage de valeurs permet ainsi de couvrir l'ensemble des vitesses NR atteignable par les giravions actuellement commercialisés et en développement correspondant aux différentes lois de commande de la vitesse NR en fonction de l'altitude et/ou des phases de vol du giravion.

Par ailleurs, pour la représentation et l'affichage de l'index et des courbes planes sur l'écran de visualisation, plusieurs exemples de réalisation sont envisagés.

En effet selon un premier exemple de réalisation, l'index représentatif du pas collectif courant peut être susceptible de se déplacer suivant un axe des abscisses par rapport à l'échelle graduée en équivalents de pas collectif et/ou par rapport à la au moins une courbe plane.

Ainsi dans ce cas, les courbes planes représentatives des limites de pas collectif peuvent se déplacer uniquement suivant l'axe des ordonnées affiché sur l'écran de visualisation.

Selon un second exemple de réalisation, la (ou les) courbe(s) plane(s) peu(ven)t être susceptible(s) de se déplacer suivant à la fois suivant l'axe des ordonnées et un axe des abscisses par rapport à l'échelle graduée en équivalents de pas collectif et/ou par rapport à l'index représentatif du pas collectif courant des pales du rotor.

Dans ce cas, l'index représentatif du pas collectif courant peut alors rester fixe et centré sur l'écran de visualisation lors d'une modification à la hausse ou à la baisse de la vitesse NR courante et/ou d'une consigne de commande du pas collectif courant par le pilote du giravion. L'ensemble des axes d'abscisses et d'ordonnées peut alors se déplacer suivant des mouvements de translation par rapport à l'index centré sur l'écran de visualisation.

Avantageusement, la (ou les) courbe(s) plane(s) peu(ven)t être représentative(s) d'une fonction croissante.

En effet, il est usuel que les différentes limites de pas collectif augmentent avec la vitesse NR, et inversement.

En pratique, les moyens d'affichage peuvent présenter au moins deux courbes planes correspondant à deux des régimes d'utilisation correspondant à la puissance maximale au décollage (PMD), la puissance maximale en continu (PMC), la puissance maximale en transitoire (PMT), la puissance de super urgence (PSU ou OEI30"), la puissance maximale d'urgence (PMU ou OEI2') et la puissance intermédiaire d'urgence (PIU ou OEIcont) du (ou des) moteur(s), les au moins deux courbes planes étant représentatives d'au moins deux pluralités différentes de limites de pas collectif sur la plage prédéterminée de valeurs de la vitesse de rotation NR du rotor, les au moins deux courbes planes étant parallèles entre elles.

Ainsi, toute droite normale à l'une des au moins deux courbes planes est également normale à l'autre des au moins deux courbes planes. La distance séparant les deux points d'intersection de la normale commune avec les au moins deux courbes planes est alors une constante.

L'invention se rapporte également à un giravion comportant au moins un moteur et une boîte de transmission de puissance principale BTP pour entrainer en rotation au moins un rotor principal.

Un tel giravion est remarquable en ce qu'il comporte un dispositif indicateur de marge de puissance IPL tel que décrit ci-dessus.

L'invention se rapporte aussi à un procédé pour fournir à un pilote d'un giravion des informations de marge de puissance disponible sur au moins un moteur et une boîte de transmission de puissance principale BTP du giravion en fonction de conditions de vol, ce procédé comportant :
- une étape de collecte pour collecter des données d'entrée correspondant à au moins deux paramètres de fonctionnement distincts du (ou des) moteur(s) et de la boîte de transmission de puissance principale BTP,
- une étape de calcul pour calculer au moins deux marges de puissance en fonction d'une part de valeurs respectives des au moins deux paramètres de fonctionnement et d'autre part de valeurs de limitations pour l'un au moins des régimes d'utilisation correspondant à une puissance maximale au décollage (PMD), une puissance maximale en continu (PMC), une puissance maximale en transitoire (PMT), une puissance de super urgence (PSU ou OEI30"), une puissance maximale d'urgence (PMU ou OEI2') et une puissance intermédiaire d'urgence (PIU ou OEIcont) du (ou des) moteur(s),
- une étape de comparaison pour comparer les au moins deux marges de puissance et identifier une marge limitative de puissance comme étant la plus petite de ces au moins deux marges de puissance,
- une étape de conversion pour convertir la marge limitative de puissance en une marge de pas collectif des pales d'un rotor du giravion,
- une étape d'affichage pour présenter, sur un écran de visualisation, la marge de pas collectif représentée sur une échelle graduée en équivalents de pas collectif dans une fenêtre de l'écran de visualisation et un index représentatif d'un pas collectif courant des pales du rotor.

Selon l'invention, un tel procédé est remarquable en ce que :
- les étapes de calcul, de comparaison et de conversion permettent de déterminer simultanément pour le(s) régime(s) d'utilisation correspondant à la puissance maximale au décollage (PMD), la puissance maximale en continu (PMC), la puissance maximale en transitoire (PMT), la puissance de super urgence (PSU ou OEI30"), la puissance maximale d'urgence (PMU ou OEI2') et la puissance intermédiaire d'urgence (PIU ou OEIcont) du (ou des) moteur(s) :
   - dans un premier temps, une pluralité de résultats correspondant à la marge de pas collectif des pales du rotor pour une pluralité de valeurs de la vitesse de rotation NR du rotor, cette pluralité de valeurs de la vitesse de rotation NR du rotor formant une plage prédéterminée de valeurs de la vitesse de rotation NR du rotor, et
   - dans un second temps, une pluralité de limites de pas collectif obtenues par une sommation entre le pas collectif courant des pales du rotor avec chacun des résultats de la pluralité de résultats,
- l'étape d'affichage présente au moins une courbe plane correspondant au(x) régime(s) d'utilisation correspondant à la puissance maximale au décollage (PMD), la puissance maximale en continu (PMC), la puissance maximale en transitoire (PMT), la puissance de super urgence (PSU ou OEI30"), la puissance maximale d'urgence (PMU ou OEI2') et la puissance intermédiaire d'urgence (PIU ou OEIcont) du (ou des) moteur(s), la au moins une courbe plane étant représentative de la pluralité de limites de pas collectif sur la plage prédéterminée de valeurs de la vitesse de rotation NR du rotor, cette au moins une courbe plane étant formée par un ensemble de points présentant en abscisses la vitesse de rotation NR du rotor et en ordonnées une limite de pas collectif correspondante, chacune des au moins une courbe plane étant susceptible de se déplacer au moins suivant un axe des ordonnées par rapport à l'échelle graduée en équivalents de pas collectif et/ou par rapport à l'index représentatif d'un pas collectif courant des pales du rotor.

Autrement dit, les étapes de calcul, de comparaison et de conversion déterminent en parallèle plusieurs marges de pas collectif des pales du rotor sur une plage de valeurs de la vitesse de rotation NR du rotor. Un calcul de sommation permet de calculer la somme entre cette marge de pas collectif et le pas collectif courant afin d'identifier la ou les limites de pas collectif sur la plage de valeurs de la vitesse de rotation NR.

L'étape d'affichage permet quant à elle d'afficher sur l'écran de visualisation les limites exprimées en pas collectif des pales du rotor sous la forme de courbes planes. Ainsi, lorsqu'une loi de commande acoustique s'active ou se désactive automatiquement au passage du giravion à proximité d'une montagne, le pilote peut alors anticiper le déplacement relatif de l'index par rapport à la courbe plane représentative de la limite positionnée immédiatement au dessus de cet index.

Grâce à un tel procédé, le pilote (ou le copilote) peut en effet voir sur l'écran de visualisation un rapprochement entre l'index et la limite la plus proche correspondant à un déplacement relatif suivant un axe des abscisses sur l'écran de visualisation. Une telle visualisation du rapprochement de la limite peut alors permettre au pilote d'adapter la consigne de commande générée par l'organe de commande. En pratique, le pilote peut ainsi modifier la position du manche de pas collectif pour anticiper le rapprochement de la courbe plane représentative de la limite de pas collectif.

Comme déjà évoqué, l'étape d'affichage peut avantageusement présenter au moins deux courbes planes représentatives d'au moins deux pluralités différentes de limites de pas collectif sur la plage prédéterminée de valeurs de la vitesse de rotation NR du rotor, les au moins deux courbes planes étant parallèles entre elles.

L'invention et ses avantages apparaîtront avec plus de détails dans le cadre de la description qui suit avec des exemples donnés à titre illustratif en référence aux figures annexées qui représentent :
- les figures 1 et 2 des courbes selon l'art antérieur de lois de commande de la vitesse NR et du couple moteur associé en fonction du temps,
- la figure 3, une vue de côté schématique d'un giravion équipé d'un dispositif IPL conforme à l'invention,
- les figures 4 à 6, différents exemples de réalisation de fenêtres d'un écran de visualisation équipant un dispositif IPL, conformément à l'invention et
- la figure 7, un schéma de principe du procédé pour fournir des informations de marge de puissance, conformément à l'invention.

Les éléments présents dans plusieurs figures distinctes sont affectés d'une seule et même référence.

Comme déjà évoqué l'invention se rapporte à un dispositif indicateur de marge de puissance IPL et un giravion équipé d'un tel dispositif IPL.

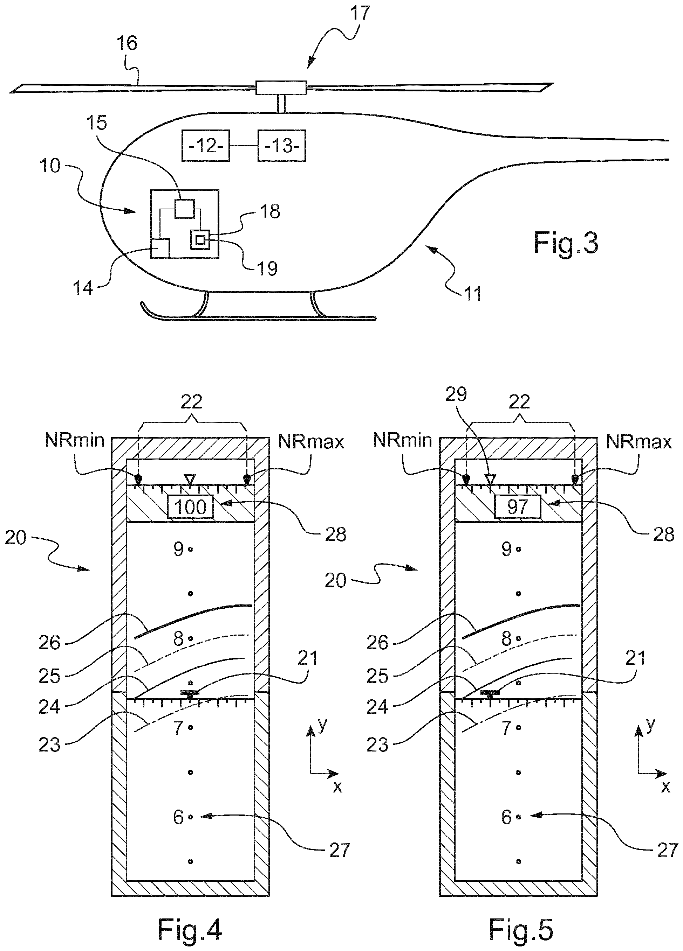

Tel que représente à la figure 3, un giravion 11 comporte au moins un moteur 12 et une boîte de transmission de puissance principale BTP 13. Le couple moteur fourni par le moteur 12 est ainsi transmis à la boîte BTP 13 qui entraîne en rotation un rotor 17 comprenant des pales 16.

Le dispositif IPL 10 est installé dans le giravion 11 et comporte des moyens d'entrée 14 permettant de collecter des données d'entrée issues notamment du moteur 12 et de la boîte BTP 13 et correspondant à des paramètres de fonctionnement du moteur 12 et de la boîte BTP 13. Un tel dispositif IPL 10 est alors connecté électriquement par voie filaire ou non filaire directement avec le moteur 12 et la boîte BTP 13 ou, indirectement, avec tout organe du giravion 11 centralisant les paramètres de fonctionnement du moteur 12 et de la boîte BTP 13.

Le dispositif IPL 10 comporte également des moyens de calcul 15 reliés électriquement avec les moyens d'entrée 14 pour calculer des marges de puissance en fonction des paramètres de fonctionnement du moteur 12 et de la boîte BTP 13 ainsi que de limitations pour les différents régimes d'utilisation du moteur 12, à savoir pour les régimes PMD, PMC PMT, OEI30", OEI2' ou OEIcont.

Par ailleurs, les moyens de calcul 15 permettent également d'effectuer une comparaison entre les différentes marges de puissance précédemment calculées pour déterminer la plus petite des marges de puissance disponible. Cette marge limitative de puissance est alors convertie en une marge de pas collectif des pales 16 du rotor 17 pour une plage prédéterminée de valeurs de la vitesse de rotation NR.

Les moyens de calcul peuvent comprendre par exemple un processeur, un circuit intégré, un calculateur, un système programmable, un circuit logique, ces exemples ne limitant pas la portée donnée à l'expression "moyens de calcul".

Enfin, le dispositif IPL 10 comporte des moyens d'affichage 18 comprenant un écran de visualisation 19 sur lequel la marge de pas collectif est affichée dans une fenêtre.

Ainsi telle que représentée à la figure 4, une telle fenêtre 20 permet d'afficher par exemple quatre courbes planes 23-26 représentatives des limites de la marge de pas collectif en fonction de la vitesse NR du rotor 17 du giravion 11. De telles courbes planes 23-26 peuvent notamment mais non exclusivement être croissantes et parallèles entre elles sur une plage prédéterminée 22 de valeurs de la vitesse NR agencée suivant un axe des abscisses X.

Un index 21 représentatif d'un pas collectif courant des pales 16 du rotor 17 est ainsi positionné dans la fenêtre 20 et sa position par rapport aux courbes planes 23-26 permet au pilote d'anticiper une variation automatique de la vitesse NR par rapport à la vitesse nominale NRnom. Une zone 28 de la fenêtre 20 permet en outre de connaître la vitesse NR exprimée en pourcentage de la valeur nominale NRnom.

La vitesse NR courante peut ainsi varier automatiquement entre la vitesse minimale NRmin et la vitesse maximale NRmax de la plage prédéterminée 22.

Par ailleurs, une échelle 27 graduée en équivalents de pas collectif peut être positionnée de manière fixe au centre de la fenêtre parallèlement à un axe des ordonnées Y.

Telles que représentées, les courbes planes 23-26 peuvent par exemple être formées par une première courbe plane 23 représentative d'une limite de pas refuge, une deuxième courbe plane 24 représentative d'une limite PMC, une troisième courbe plane 25 représentative d'une limite PMD et une quatrième courbe plane 26 représentative d'une limite PMT.

Par ailleurs dans le cas d'un giravion équipé d'au moins deux moteurs, si l'un des moteurs tombe en panne, les courbes planes 23-26 peuvent dans ce cas être formées par une première courbe plane 23, une deuxième courbe plane 24 représentative d'une limite OEIcont, une troisième courbe plane 25 représentative d'une limite OEI2' et une quatrième courbe plane 26 représentative d'une limite OEI30".

En outre selon un premier exemple de réalisation représenté à la figure 5, la fenêtre 20 peut permettre l'affichage d'un index 21 mobile suivant l'axe des abscisses X par rapport à l'échelle 27.

Ainsi lorsque le pas collectif courant atteint une valeur par exemple de 97% de la vitesse nominale NRnom, comme indiqué dans la zone 28, l'index 21 s'écarte sur la gauche de l'échelle 27 et tend à se rapprocher de la deuxième courbe plane 24. Une flèche 29 permet également d'illustrer le positionnement du pas collectif courant à l'intérieur de la plage prédéterminée 22.

L'index 21 reste néanmoins centré dans la fenêtre 20 suivant l'axe des ordonnées Y mais les courbes planes 23-26 peuvent se déplacer suivant cet axe des ordonnées Y par rapport à cet index 21. Par ailleurs, l'index 21 et la flèche 29 restent alignés suivant une droite parallèle à l'axe des ordonnées Y.

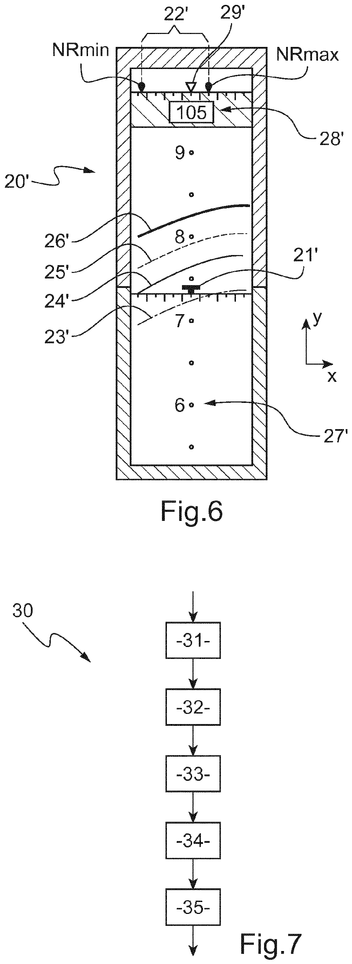

Par ailleurs selon un second exemple de réalisation tel que représenté à la figure 6, l'index 21' peut également rester immobile dans la fenêtre 20' et centré sur l'échelle 27' suivant l'axe des abscisses X. Dans ce cas, les courbes planes 23'-26'peuvent alors se déplacer suivant l'axe des abscisses X et l'axe des ordonnées Y par rapport à l'index 21'.

De plus, la flèche 29' illustrant le positionnement du pas collectif courant dans la plage prédéterminée 22' reste centrée suivant l'axe des abscisses X sur l'échelle 27'. Dans ce cas les valeurs maximales NRmax ou minimal NRmin de la plage prédéterminée 22' se déplacent par rapport à la flèche 29'.

La zone 28' permet dans ce cas d'indiquer une valeur de pas collectif courant égale par exemple à 105% de la valeur nominale NRnom.

Tel que représenté à la figure 7 et comme déjà évoqué, l'invention concerne également un procédé 30 permettant de fournir à un pilote de giravion 11 des informations relatives à la marge de puissance disponible sur au moins un moteur 12 et une boîte BTP 13 du giravion 11 en fonction de conditions de vol.

Ainsi un tel procédé 30 comporte une étape de collecte 31 pour collecter des données d'entrée correspondant à différents paramètres de fonctionnement du moteur 12 et de la boîte BTP 13.

Le procédé 30 comporte alors ensuite une étape de calcul 32 pour calculer au moins deux marges de puissance en fonction d'une part de valeurs des paramètres de fonctionnement T4, NG, TQ1, TQ2 du moteur 12 et de la boîte BTP 13 ainsi que d'autre part de valeurs de limitations pour les différents régimes d'utilisation PMD, PMC, PMT, OEI30", OEI2' et OEIcont du moteur 12.

Un tel procédé 30 comporte aussi une étape de comparaison 33 permettant de comparer les au moins deux marges de puissance et d'identifier une marge limitative de puissance comme étant la plus petite des au moins deux marges de puissance.

Puis, le procédé 30 comporte une étape de conversion 34 pour convertir la marge limitative de puissance en une marge de pas collectif des pales 16 du rotor 17 du giravion 11.

En outre, les étapes de calcul 32, de comparaison 33 et de conversion 34 permettent de déterminer simultanément :
- dans un premier temps, une pluralité de résultats correspondant à la marge de pas collectif des pales 16 du rotor 17 pour une pluralité de valeurs de la vitesse de rotation NR du rotor 17, la pluralité de valeurs de la vitesse de rotation NR du rotor 17 formant une plage prédéterminée 22, 22' de valeurs de la vitesse de rotation NR du rotor 17, et
- dans un second temps, une pluralité de limites de pas collectif obtenues par une sommation entre le pas collectif courant des pales 16 du rotor 17 avec chacun des résultats de la pluralité de résultats.

Enfin, le procédé 30 comporte une étape d'affichage 35 permettant de présenter, sur l'écran de visualisation 19, la marge de pas collectif représentée sur une échelle graduée en équivalents de pas collectif dans la fenêtre 20, 20' de l'écran de visualisation 19 et un index 21, 21' représentatif du pas collectif courant des pales 16 du rotor 17.

Une telle étape d'affichage 35 permet ainsi de présenter au moins une courbe plane 23-26, 23'-26' représentative de la pluralité de limites de pas collectif sur la plage prédéterminée 22, 22' de valeurs de la vitesse de rotation NR du rotor 17. Ces courbes planes 23-26, 23'-26' sont alors formées par un ensemble de points présentant en abscisses un paramètre fonction d'une vitesse de rotation NR du rotor 17 et en ordonnées une limite de pas collectif correspondante.

Par ailleurs, chacune des courbes planes 23-26, 23'-26' est apte à se déplacer au moins suivant un axe des ordonnées Y par rapport à l'échelle 27, 27' graduée en équivalents de pas collectif et/ou par rapport à l'index 21, 21' représentatif d'un pas collectif courant des pales 16 du rotor 17.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Dispositif indicateur de marge de puissance, étant un instrument de première limitation (IPL ; 10) pour un giravion (11), destiné à fournir à un pilote dudit giravion (11) des informations de marge de puissance disponible sur au moins un moteur (12) et une boîte de transmission de puissance principale (BTP ; 13) dudit giravion (11) en fonction de conditions de vol, ledit dispositif (IPL ; 10) comportant :
• des moyens d'entrée (14) pour collecter des données d'entrée correspondant à au moins deux paramètres de fonctionnement distincts dudit au moins un moteur (12) et de ladite boîte de transmission de puissance principale (BTP ; 13),
• des moyens de calcul (15) connectés audits moyens d'entrée (14), lesdits moyen de calcul (15) permettant de :
- calculer au moins deux marges de puissance en fonction d'une part de valeurs respectives desdits au moins deux paramètres de fonctionnement et d'autre part de valeurs de limitations pour l'un au moins des régimes d'utilisation correspondant à une puissance maximale au décollage (PMD), une puissance maximale en continu (PMC), une puissance maximale en transitoire (PMT), une puissance de super urgence (PSU ou OEI30"), une puissance maximale d'urgence (PMU ou OEI2') et une puissance intermédiaire d'urgence (PIU ou OEIcont) dudit au moins un moteur (12),
- comparer lesdites au moins deux marges de puissance pour identifier une marge limitative de puissance comme étant la plus petite desdites au moins deux marges de puissance,
- convertir ladite marge limitative de puissance en une marge de pas collectif des pales (16) d'un rotor (17) dudit giravion (11),
• des moyens d'affichage (18) présentant, sur un écran de visualisation (19) ladite marge de pas collectif représentée sur une échelle (27, 27') graduée en équivalents de pas collectif dans une fenêtre (20, 20') dudit écran de visualisation (19) et un index (21, 21') représentatif d'un pas collectif courant des pales (16) dudit rotor (17),
ledit dispositif étant **caractérisé en ce que** :
• lesdits moyens de calcul (15) sont configurés pour déterminer simultanément pour l'un au moins desdits régimes d'utilisation correspondant à ladite puissance maximale au décollage (PMD), ladite puissance maximale en continu (PMC), ladite puissance maximale en transitoire (PMT), ladite puissance de super urgence (PSU ou OEI30"), ladite puissance maximale d'urgence (PMU ou OEI2') et ladite puissance intermédiaire d'urgence (PIU ou OEIcont) dudit au moins un moteur (12) :
- dans un premier temps, une pluralité de résultats correspondant à ladite marge de pas collectif des pales (16) dudit rotor (17) pour une pluralité de valeurs de la vitesse de rotation (NR) dudit rotor (17), ladite pluralité de valeurs de la vitesse de rotation (NR) dudit rotor (17) formant une plage prédéterminée (22, 22') de valeurs de la vitesse de rotation (NR) dudit rotor (17), et
- dans un second temps, une pluralité de limites de pas collectif obtenues par une sommation entre le pas collectif courant des pales (16) dudit rotor (17) avec chacun desdits résultats de ladite pluralité de résultats,
• lesdits moyens d'affichage (18) présentent au moins une courbe plane (23-26, 23'-26') correspondant audit au moins un desdits régimes d'utilisation correspondant à ladite puissance maximale au décollage (PMD), ladite puissance maximale en continu (PMC), ladite puissance maximale en transitoire (PMT), ladite puissance de super urgence (PSU ou OEI30"), ladite puissance maximale d'urgence (PMU ou OEI2') et ladite puissance intermédiaire d'urgence (PIU ou OEIcont) dudit au moins un moteur (12), ladite au moins une courbe plane (23-26, 23'-26') étant représentative de ladite pluralité de limites de pas collectif sur ladite plage prédéterminée (22, 22') de valeurs de la vitesse de rotation (NR) dudit rotor (17), ladite au moins une courbe plane (23-26, 23'-26') étant formée par un ensemble de points présentant en abscisses la vitesse de rotation (NR) dudit rotor (17) et en ordonnées une limite de pas collectif correspondante, chacune desdites au moins une courbe plane (23-26, 23'-26') étant susceptible de se déplacer au moins suivant un axe des ordonnées Y par rapport à ladite échelle (27, 27') graduée en équivalents de pas collectif et/ou par rapport audit index (21, 21') représentatif d'un pas collectif courant des pales (16) dudit rotor (17).

2. Dispositif selon la revendication 1,
**caractérisé en ce que** lesdits au moins deux paramètres de fonctionnement distincts sont choisis parmi le groupe comportant au moins une vitesse de rotation d'un générateur de gaz (NG) dudit moteur (12), un premier couple (TQ1) mesuré au niveau du moteur (12), un second couple (TQ2) mesuré au niveau d'une entrée de ladite boîte de transmission de puissance principale (BTP ; 13) et une température d'éjection des gaz T4 mesurée à l'entrée d'une turbine libre du moteur (12).

3. Dispositif selon l'une quelconque des revendications 1 à 2,
**caractérisé en ce que** ladite plage prédéterminée (22, 22') de valeurs de la vitesse de rotation (NR) est exprimée en pourcentage d'une valeur nominale (NRnom) de la vitesse de rotation (NR).

4. Dispositif selon la revendication 3,
**caractérisé en ce que** ladite plage prédéterminée (22, 22') de valeurs de la vitesse de rotation (NR) s'étend entre une vitesse minimale (NRmin) correspondant à 70% de ladite valeur nominale (NRnom) de la vitesse de rotation (NR) et une vitesse maximale (NRmax) correspondant à 130% de ladite valeur nominale (NRnom) de la vitesse de rotation (NR).

5. Dispositif selon l'une quelconque des revendications 1 à 4,
**caractérisé en ce que** ledit index (21) représentatif dudit pas collectif courant est susceptible de se déplacer suivant un axe des abscisses X par rapport à ladite échelle (27) graduée en équivalents de pas collectif et/ou par rapport à ladite au moins une courbe plane (23-26).

6. Dispositif selon l'une quelconque des revendications 1 à 5,
**caractérisé en ce que** chacune desdites au moins une courbe plane (23'-26') est susceptible de se déplacer à la fois suivant ledit axe des ordonnées Y et un axe des abscisses X par rapport à ladite échelle (27') graduée en équivalents de pas collectif et/ou par rapport audit index (21') représentatif dudit pas collectif courant des pales (16) dudit rotor (17).

7. Dispositif selon l'une quelconque des revendications 1 à 6, **caractérisé en ce que** ladite au moins une courbe plane (23-26, 23'-26') est représentative d'une fonction croissante.

8. Dispositif selon l'une quelconque des revendications 1 à 7,
**caractérisé en ce que** lesdits moyens d'affichage (18) présentent au moins deux courbes planes (23-26, 23'-26') correspondant à deux desdits régimes d'utilisation correspondant à ladite puissance maximale au décollage (PMD), ladite puissance maximale en continu (PMC), ladite puissance maximale en transitoire (PMT), ladite puissance de super urgence (PSU ou OEI30"), ladite puissance maximale d'urgence (PMU ou OEI2') et ladite puissance intermédiaire d'urgence (PIU ou OEIcont) dudit au moins un moteur (12), lesdites au moins deux courbes planes (23-26, 23'-26') étant représentatives d'au moins deux pluralités différentes de limites de pas collectif sur ladite plage prédéterminée (22, 22') de valeurs de la vitesse de rotation (NR) dudit rotor (17), lesdites au moins deux courbes planes (23-26, 23'-26') étant parallèles entre elles.

9. Giravion (11) comportant au moins un moteur (12) et une boîte de transmission de puissance principale (BTP ; 13) pour entrainer en rotation au moins un rotor principal (17),
**caractérisé en ce que** ledit giravion (11) comporte un dispositif indicateur de marge de puissance (IPL ; 10) selon l'une quelconque des revendications 1 à 8.

10. Procédé (30) pour fournir à un pilote d'un giravion (11) des informations de marge de puissance disponible sur au moins un moteur (12) et une boîte de transmission de puissance principale (BTP ; 13) dudit giravion (11) en fonction de conditions de vol, ledit procédé (30) comportant :
• une étape de collecte (31) pour collecter des données d'entrée correspondant à au moins deux paramètres de fonctionnement distincts dudit au moins un moteur (12) et de ladite boîte de transmission de puissance principale (BTP ; 13),
• une étape de calcul (32) pour calculer au moins deux marges de puissance en fonction d'une part de valeurs respectives desdits au moins deux paramètres de fonctionnement et d'autre part de valeurs de limitations pour l'un au moins des régimes d'utilisation correspondant à une puissance maximale au décollage (PMD), une puissance maximale en continu (PMC), une puissance maximale en transitoire (PMT), une puissance de super urgence (PSU ou OEI30"), une puissance maximale d'urgence (PMU ou OEI2') et une puissance intermédiaire d'urgence (PIU ou OEIcont) dudit au moins un moteur (12),
• une étape de comparaison (33) pour comparer lesdites au moins deux marges de puissance et identifier une marge limitative de puissance comme étant la plus petite desdites au moins deux marges de puissance,
• une étape de conversion (34) pour convertir ladite marge limitative de puissance en une marge de pas collectif des pales (16) d'un rotor (17) dudit giravion (11),
• une étape d'affichage (35) pour présenter, sur un écran de visualisation (19), ladite marge de pas collectif représentée sur une échelle graduée en équivalents de pas collectif dans une fenêtre (20, 20') dudit écran de visualisation (19) et un index (21, 21') représentatif d'un pas collectif courant des pales (16) dudit rotor (17),
ledit procédé (30) étant **caractérisé en ce que** :
• lesdites étapes de calcul (32), de comparaison (33) et de conversion (34) permettent de déterminer simultanément pour l'un au moins desdits régimes d'utilisation correspondant à ladite puissance maximale au décollage (PMD), ladite puissance maximale en continu (PMC), ladite puissance maximale en transitoire (PMT), ladite puissance de super urgence (PSU ou OEI30"), ladite puissance maximale d'urgence (PMU ou OEI2') et ladite puissance intermédiaire d'urgence (PIU ou OEIcont) dudit au moins un moteur (12) :
- dans un premier temps, une pluralité de résultats correspondant à ladite marge de pas collectif des pales (16) dudit rotor (17) pour une pluralité de valeurs de la vitesse de rotation (NR) dudit rotor (17), ladite pluralité de valeurs de la vitesse de rotation (NR) dudit rotor (17) formant une plage prédéterminée (22, 22') de valeurs de la vitesse de rotation (NR) dudit rotor (17), et
- dans un second temps, une pluralité de limites de pas collectif obtenues par une sommation entre le pas collectif courant des pales (16) dudit rotor (17) avec chacun desdits résultats de ladite pluralité de résultats,
• ladite étape d'affichage (35) présente au moins une courbe plane (23-26, 23'-26') correspondant audit au moins un desdits régimes d'utilisation correspondant à ladite puissance maximale au décollage (PMD), ladite puissance maximale en continu (PMC), ladite puissance maximale en transitoire (PMT), ladite puissance de super urgence (PSU ou OEI30"), ladite puissance maximale d'urgence (PMU ou OEI2') et ladite puissance intermédiaire d'urgence (PIU ou OEIcont) dudit au moins un moteur (12), ladite au moins une courbe plane (23-26, 23'-26') étant représentative de ladite pluralité de limites de pas collectif sur ladite plage prédéterminée (22, 22') de valeurs de la vitesse de rotation (NR) dudit rotor (17), ladite au moins une courbe plane (23-26, 23'-26') étant formée par un ensemble de points présentant en abscisses la vitesse de rotation (NR) dudit rotor (17) et en ordonnées une limite de pas collectif correspondante, chacune desdites au moins une courbe plane (23-26, 23'-26') étant susceptible de se déplacer au moins suivant un axe des ordonnées Y par rapport à ladite échelle (27, 27') graduée en équivalents de pas collectif et/ou par rapport audit index (21, 21') représentatif d'un pas collectif courant des pales (16) dudit rotor (17).

11. Procédé selon la revendication 10,
**caractérisé en ce que** ladite plage prédéterminée (22, 22') de valeurs de la vitesse de rotation (NR) est exprimée en pourcentage d'une valeur nominale (NRnom) de la vitesse de rotation (NR).

12. Procédé selon l'une quelconque des revendications 10 à 11,
**caractérisé en ce que** ladite plage prédéterminée (22, 22') de valeurs de la vitesse de rotation (NR) s'étend entre une vitesse minimale (NRmin) correspondant à 70% de ladite valeur nominale (NRnom) de la vitesse de rotation (NR) et une vitesse maximale (NRmax) correspondant à 130% de ladite valeur nominale (NRnom) de la vitesse de rotation (NR).

13. Procédé selon l'une quelconque des revendications 10 à 12,
**caractérisé en ce que** ledit index (21) représentatif dudit pas collectif courant est susceptible de se déplacer suivant un axe des abscisses X par rapport à ladite échelle (27) graduée en équivalents de pas collectif et/ou par rapport à ladite au moins une courbe plane (23-26).

14. Procédé selon l'une quelconque des revendications 10 à 12,
**caractérisé en ce que** chacune desdites au moins une courbe plane (23'-26') est susceptible de se déplacer à la fois suivant ledit axe des ordonnées Y et un axe des abscisses X par rapport à ladite échelle (27') graduée en équivalents de pas collectif et/ou par rapport audit index (21') représentatif dudit pas collectif courant des pales (16) dudit rotor (17).

15. Procédé selon l'une quelconque des revendications 10 à 14,
**caractérisé en ce que** ladite au moins une courbe plane (23-26, 23'-26') est représentative d'une fonction croissante.

16. Procédé selon l'une quelconque des revendications 10 à 15,
**caractérisé en ce que** ladite étape d'affichage (35) présente au moins deux courbes planes (23-26, 23'-26') correspondant à deux desdits régimes d'utilisation correspondant à ladite puissance maximale au décollage (PMD), ladite puissance maximale en continu (PMC), ladite puissance maximale en transitoire (PMT), ladite puissance de super urgence (PSU ou OEI30"), ladite puissance maximale d'urgence (PMU ou OEI2') et ladite puissance intermédiaire d'urgence (PIU ou OEIcont) dudit au moins un moteur (12), lesdites au moins deux courbes planes (23-26, 23'-26') étant représentatives d'au moins deux pluralités différentes de limites de pas collectif sur ladite plage prédéterminée (22, 22') de valeurs de la vitesse de rotation (NR) dudit rotor (17), lesdites au moins deux courbes planes (23-26, 23'-26') étant parallèles entre elles.

## Patentansprüche

1. Leistungsbandbreite-Anzeigevorrichtung, die ein Instrument der ersten Begrenzung (IPL; 10) für ein Drehflügelflugzeug (11) ist und vorgesehen ist, um einem Piloten des Drehflügelflugzeugs (11) Informationen über die verfügbare Leistungsbandbreite an mindestens einem Motor (12) und einer Hauptgetriebebox (BTP; 13) des Drehflügelflugzeugs (11) in Abhängigkeit von den Flugbedingungen bereitzustellen, wobei die Vorrichtung (IPL; 10) umfasst:
• Eingabemittel (14) zum Sammeln von Eingabedaten, die mindestens zwei verschiedenen Betriebsparametern des mindestens einen Motors (12) und der Hauptgetriebebox (BTP; 13) entsprechen,
• Berechnungsmittel (15), die mit den Eingabemitteln (14) verbunden sind, wobei die Berechnungsmittel (15) es ermöglichen,
- mindestens zwei Leistungsbandbreiten zu berechnen, basierend einerseits auf den jeweiligen Werten der mindestens zwei Betriebsparameter und andererseits auf Begrenzungswerten für mindestens eine der Betriebsarten, die einer maximalen Startleistung (MDP), einer maximalen Dauerleistung (PMC), einer maximalen transienten Leistung (PMT), einer Supernotfallleistung (PSU oder OEI30"), einer maximalen Notfallleistung (PMU oder OEI2') und einer mittleren Notfallleistung (PIU oder OEIcont) des mindestens einen Motors (12) entsprechen,
- die mindestens zwei Leistungsbandbreiten zu vergleichen, um eine Leistungsbegrenzungsbandbreite als die kleinere der mindestens zwei Leistungsbandbreiten zu identifizieren,
- die Leistungsbegrenzungsbandbreite in eine kollektive Neigungsbandbreite der Blätter (16) eines Rotors (17) des Drehflügelflugzeugs (11) umzuwandeln,
• Anzeigemittel (18), die auf einem Anzeigebildschirm (19) die kollektive Neigungsbandbreite, dargestellt auf einer Skala (27, 27'), die in kollektiven Neigungsäquivalenten geteilt ist, in einem Fenster (20, 20') des Anzeigebildschirms (19), und einen für eine aktuelle kollektive Neigung der Blätter (16) des Rotors (17) repräsentativen Index (21, 21') anzeigen,
wobei die Vorrichtung **dadurch gekennzeichnet ist, dass**:
• die Berechnungsmittel (15) konfiguriert sind, um für mindestens eine der Betriebsarten, die der maximalen Startleistung (MDP), der maximalen Dauerleistung (PMC), der maximalen transienten Leistung (PMT), der Supernotfallleistung (PSU oder OEI30"), der maximalen Notfallleistung (PMU oder OEI2') und der mittleren Notfallleistung (PIU oder OEIcont) des mindestens einen Motors (12) entsprechen, zu bestimmen:
- in einem ersten Schritt eine Mehrzahl von Ergebnissen, die der kollektiven Neigungsbandbreite der Blätter (16) des Rotors (17) für eine Mehrzahl von Drehzahlwerten (NR) des Rotors (17) entsprechen, wobei die Mehrzahl von Drehzahlwerten (NR) des Rotors (17) eine vorbestimmte Bandbreite (22, 22') von Drehzahlwerten (NR) des Rotors (17) bildet, und
- in einem zweiten Schritt eine Mehrzahl von kollektiven Neigungsbegrenzungen, die durch Summieren der aktuellen kollektiven Neigung der Blätter (16) des Rotors (17) mit jedem der Ergebnisse aus der Mehrzahl von Ergebnissen erhalten werden,
• wobei die Anzeigemittel (18) mindestens eine flache Kurve (23-26, 23'-26') anzeigen, die der mindestens einer der Betriebsarten entspricht, die der maximalen Startleistung (MDP), der maximalen Dauerleistung (PMC), der maximalen transienten Leistung (PMT), der Supernotfallleistung (PSU oder OEI30"), der maximalen Notfallleistung (PMU oder OEI2') und der mittleren Notfallleistung (PIU oder OEIcont) des mindestens einen Motors (12) entsprechen, wobei die mindestens eine flache Kurve (23-26, 23'-26') repräsentativ für die Mehrzahl der kollektiven Neigungsgrenzen in der vorbestimmten Bandbreite (22, 22') von Werten der Drehzahl (NR) des Rotors (17) ist, wobei die mindestens eine flache Kurve (23-26, 23' -26') durch eine Menge von Punkten gebildet wird, die als Abszisse die Drehzahl (NR) des Rotors (17) und als Ordinate eine entsprechende kollektive Neigungsgrenze haben, jede der mindestens einen flachen Kurven (23-26, 23'-26') mindestens entlang einer Y-Achse in Bezug auf die in kollektiven Neigungsäquivalenten geteilte Skala (27, 27') und/oder in Bezug auf den für eine aktuelle kollektive Neigung der Blätter (16) des Rotors (17) repräsentativen Index (21, 21') beweglich ist.

2. Vorrichtung nach Anspruch 1, **dadurch gekennzeichnet, dass** die mindestens zwei verschiedenen Betriebsparameter ausgewählt sind aus der Gruppe bestehend aus mindestens einer Drehzahl eines Gasgenerators (NG) des Motors (12), einem am Motor (12) gemessenen ersten Drehmoment (TQ1), einem an einem Eingang der Hauptgetriebebox (BTP ; 13) gemessenen zweiten Drehmoment (TQ2) und einer am Eingang einer freien Turbine des Motors (12) gemessen Gasausstoßtemperatur T4.

3. Vorrichtung nach einem der Ansprüche 1 bis 2, **dadurch gekennzeichnet, dass**
die vorbestimmte Bandbreite (22, 22') der Drehzahlwerte (NR) als Prozentsatz eines Nennwertes (NRnom) der Drehzahl (NR) ausgedrückt wird.

4. Vorrichtung nach Anspruch 3, **dadurch gekennzeichnet, dass** sich die vorgegebene Bandbreite (22, 22') der Drehzahlwerte (NR) zwischen einer Mindestdrehzahl (NRmin), die 70% des Nennwertes (NRnom) der Drehzahl (NR) entspricht, und einer Höchstdrehzahl (NRmax) erstreckt, die 130% des Nennwertes (NRnom) der Drehzahl (NR) entspricht.

5. Vorrichtung nach einem der Ansprüche 1 bis 4, **dadurch gekennzeichnet, dass**
der für die aktuelle kollektive Neigung repräsentative Index (21) entlang einer Abszissenachse X in Bezug auf die in kollektiven Neigungsäquivalenten geteilte Skala (27") und/oder in Bezug auf die mindestens eine flache Kurve (23-26) beweglich ist.

6. Vorrichtung nach einem der Ansprüche 1 bis 5, **dadurch gekennzeichnet, dass**
jede der mindestens einen flachen Kurven (23'-26') sowohl entlang der Ordinatenachse Y als auch einer Abszissenachse X in Bezug auf die in kollektiven Neigungsäquivalenten geteilte Skala (27') und/oder in Bezug auf den für die aktuelle kollektive Neigung repräsentativen Index (21') beweglich ist.

7. Vorrichtung nach einem der Ansprüche 1 bis 6, **dadurch gekennzeichnet, dass**
die mindestens eine flache Kurve (23-26, 23'-26') repräsentativ für eine zunehmende Funktion ist.

8. Vorrichtung nach einem der Ansprüche 1 bis 7,
**dadurch gekennzeichnet, dass** die Anzeigemittel (18) mindestens zwei flache Kurven (23-26, 23'-26') aufweisen, die zwei der Betriebsarten entsprechen, die der maximalen Startleistung (MDP), der maximalen Dauerleistung (PMC), der maximalen transienten Leistung (PMT), der Supernotfallleistung (PSU oder OEI30"), der maximalen Notfallleistung (PMU oder OEI2') und der mittleren Notfallleistung (PIU oder OEIcont) des mindestens einen Motors (12) entsprechen, wobei die mindestens zwei flachen Kurven (23-26, 23'-26') repräsentativ für mindestens zwei verschiedene Mehrzahlen von kollektiven Neigungsbegrenzungen in der vorbestimmten Bandbreite (22, 22') von Werten der Drehzahl (NR) des Rotors (17) sind, wobei die mindestens zwei flachen Kurven (23-26, 23'-26') parallel zueinander sind.

9. Drehflügelflugzeug (11) mit mindestens einem Motor (12) und einer Hauptgetriebebox (BTP; 13) zum Drehen mindestens eines Hauptrotors (17), **dadurch gekennzeichnet, dass** das Drehflügelflugzeug (11) eine Leistungsbandbreite-Anzeigevorrichtung (IPL; 10) nach einem der Ansprüche 1 bis 8 aufweist.

10. Verfahren (30), um einem Piloten eines Drehflügelflugzeugs (11) Informationen über die verfügbare Leistungsbandbreite an mindestens einem Motor (12) und einer Hauptgetriebebox (BTP; 13) des Drehflügelflugzeugs (11) in Abhängigkeit von den Flugbedingungen bereitzustellen, wobei das Verfahren (30) umfasst
• einen Sammelschritt (31) zum Sammeln von Eingabedaten, die mindestens zwei verschiedenen Betriebsparametern des mindestens einen Motors (12) und der Hauptgetriebebox (BTP; 13) entsprechen,
• einen Berechnungsschritt (32) zum Berechnen von mindestens zwei Leistungsbandbreiten basierend einerseits auf den jeweiligen Werten der mindestens zwei Betriebsparameter und andererseits auf Begrenzungswerten für mindestens eine der Betriebsarten, die einer maximalen Startleistung (MDP), einer maximalen Dauerleistung (PMC), einer maximalen transienten Leistung (PMT), einer Supernotfallleistung (PSU oder OEI30"), einer maximalen Notfallleistung (PMU oder OEI2') und einer mittleren Notfallleistung (PIU oder OEIcont) des mindestens einen Motors (12) entsprechen,
• einen Vergleichsschritt (33), um die mindestens zwei Leistungsbandbreiten zu vergleichen und eine Leistungsbegrenzungsbandbreite als die kleinere der mindestens zwei Leistungsbandbreiten zu identifizieren,
• einen Umwandlungsschritt (34) zum Umwandeln der Leistungsbegrenzungsbandbreite in eine kollektive Neigungsbandbreite der Blätter (16) eines Rotors (17) des Drehflügelflugzeugs (11),
• einen Anzeigeschritt (35) zum Anzeigen der kollektiven Neigungsbandbreite, dargestellt auf einer Skala (27, 27'), die in kollektiven Neigungsäquivalenten geteilt ist, in einem Fenster (20, 20') eines Anzeigebildschirms (19), und eines für eine aktuelle kollektive Neigung der Blätter (16) des Rotors (17) repräsentativen Index (21, 21'),
wobei das Verfahren (30) **dadurch gekennzeichnet ist, dass**: die Berechnungs- (32), Vergleichs- (33) und Umwandlungsschritte (34) es ermöglichen, für mindestens eine der Betriebsarten, die der maximalen Startleistung (MDP), der maximalen Dauerleistung (PMC), der maximalen transienten Leistung (PMT), der Supernotfallleistung (PSU oder OEI30"), der maximalen Notfallleistung (PMU oder OEI2') und der mittleren Notfallleistung (PIU oder OEIcont) des mindestens einen Motors (12) entsprechen, zu bestimmen:
- in einem ersten Schritt eine Mehrzahl von Ergebnissen, die der kollektiven Neigungsbandbreite der Blätter (16) des Rotors (17) für eine Mehrzahl von Drehzahlwerten (NR) des Rotors (17) entsprechen, wobei die Mehrzahl von Drehzahlwerten (NR) des Rotors (17) eine vorbestimmte Bandbreite (22, 22') von Drehzahlwerten (NR) des Rotors (17) bildet, und
- in einem zweiten Schritt eine Mehrzahl von kollektiven Neigungsbegrenzungen, die durch Summieren der aktuellen kollektiven Neigung der Blätter (16) des Rotors (17) mit jedem der Ergebnisse aus der Mehrzahl von Ergebnissen erhalten werden,
• wobei der Anzeigeschritt (35) mindestens eine flache Kurve (23-26, 23'-26') anzeigt, die der mindestens einer der Betriebsarten entspricht, die der maximalen Startleistung (MDP), der maximalen Dauerleistung (PMC), der maximalen transienten Leistung (PMT), der Supernotfallleistung (PSU oder OEI30"), der maximalen Notfallleistung (PMU oder OEI2') und der mittleren Notfallleistung (PIU oder OEIcont) des mindestens einen Motors (12) entsprechen, wobei die mindestens eine flache Kurve (23-26, 23'-26') repräsentativ für die Mehrzahl der kollektiven Neigungsgrenzen in der vorbestimmten Bandbreite (22, 22') von Werten der Drehzahl (NR) des Rotors (17) ist, wobei die mindestens eine flache Kurve (23-26, 23' -26') durch eine Menge von Punkten gebildet wird, die als Abszisse die Drehzahl (NR) des Rotors (17) und als Ordinate eine entsprechende kollektive Neigungsgrenze haben, und jede der mindestens einen flachen Kurven (23-26, 23'-26') mindestens entlang einer Y-Achse in Bezug auf die in kollektiven Neigungsäquivalenten geteilte Skala (27, 27') und/oder in Bezug auf den für eine aktuelle kollektive Neigung der Blätter (16) des Rotors (17) repräsentativen Index (21, 21') beweglich ist.

11. Verfahren nach Anspruch 10, **dadurch gekennzeichnet, dass** die vorbestimmte Bandbreite (22, 22') der Drehzahlwerte (NR) als Prozentsatz eines Nennwertes (NRnom) der Drehzahl (NR) ausgedrückt wird.

12. Verfahren nach einem der Ansprüche 10 bis 11, **dadurch gekennzeichnet, dass**
sich die vorgegebene Bandbreite (22, 22') der Drehzahlwerte (NR) zwischen einer Mindestdrehzahl (NRmin), die 70% des Nennwertes (NRnom) der Drehzahl (NR) entspricht, und einer Höchstdrehzahl (NRmax) erstreckt, die 130% des Nennwertes (NRnom) der Drehzahl (NR) entspricht.

13. Verfahren nach einem der Ansprüche 10 bis 12, **dadurch gekennzeichnet, dass**
der für die aktuelle kollektive Neigung repräsentative Index (21) entlang einer Abszissenachse X in Bezug auf die in kollektiven Neigungsäquivalenten geteilte Skala (27") und/oder in Bezug auf die mindestens eine flache Kurve (23-26) beweglich ist.

14. Verfahren nach einem der Ansprüche 10 bis 13, **dadurch gekennzeichnet, dass**
jede der mindestens einen flachen Kurven (23'-26') sowohl entlang der Ordinatenachse Y als auch einer Abszissenachse X in Bezug auf die in kollektiven Neigungsäquivalenten geteilte Skala (27') und/oder in Bezug auf den für die aktuelle kollektive Neigung repräsentativen Index (21') beweglich ist.

15. Verfahren nach einem der Ansprüche 10 bis 14, **dadurch gekennzeichnet, dass**
die mindestens eine flache Kurve (23-26, 23'-26') repräsentativ für eine zunehmende Funktion ist.

16. Verfahren nach einem der Ansprüche 10 bis 15, **dadurch gekennzeichnet, dass**
der Anzeigeschritt (35) mindestens zwei flache Kurven (23-26, 23'-26') anzeigt, die zwei der Betriebsarten entsprechen, die der maximalen Startleistung (MDP), der maximalen Dauerleistung (PMC), der maximalen transienten Leistung (PMT), der Supernotfallleistung (PSU oder OEI30"), der maximalen Notfallleistung (PMU oder OEI2') und der mittleren Notfallleistung (PIU oder OEIcont) des mindestens einen Motors (12) entsprechen, wobei die mindestens zwei flachen Kurven (23-26, 23'-26') repräsentativ für mindestens zwei verschiedene Mehrzahlen von kollektiven Neigungsbegrenzungen in der vorbestimmten Bandbreite (22, 22') von Werten der Drehzahl (NR) des Rotors (17) sind, wobei die mindestens zwei flachen Kurven (23-26, 23'-26') parallel zueinander sind.

## Claims

1. Power margin indicator device that is a first-limit instrument (IPL; 10) for a rotorcraft (11), intended for providing, to a pilot of said rotorcraft (11), information on the available power margin for at least one engine (12) and a main power gearbox (BTP; 13) of said rotorcraft (11) depending on flight conditions, said device (IPL; 10) comprising:
• input means (14) for collecting input data that correspond to at least two separate operating parameters of said at least one engine (12) and of said main power gearbox (BTP; 13),
• calculation means (15) that are connected to said input means (14), said calculation means (15) making it possible to:
- calculate at least two power margins on the basis of respective values of said at least two operating parameters and limit values for at least one of the operating speeds that correspond to a maximum power at take-off (PMD), a maximum continuous power (PMC), a maximum transitional power (PMT), a super-emergency power (PSU or OEI30"), a maximum emergency power (PMU or OEI2') and an intermediate emergency power (PIU or OEIcont) of said at least one engine (12),
- comparing said at least two power margins to identify a limit power margin as the smallest of said at least two power margins,
- converting said limit power margin into a collective-pitch margin of the blades (16) of a rotor (17) of said rotorcraft (11),
• display means (18) that show, on a viewing screen (19), said collective-pitch margin represented on a scale (27, 27') that is graduated in collective-pitch equivalents in a window (20, 20') of said viewing screen (19) and an index (21, 21') that represents a current collective pitch of the blades (16) of said rotor (17),
said device being **characterised in that**
• said calculating means (15) are configured for simultaneously determining, for at least one of said operating speeds that correspond to said maximum power at take-off (PMD), said maximum continuous power (PMC), said maximum transitional power (PMT), said super-emergency power (PSU or OEI30"), said maximum emergency power (PMU or OEI2') and said intermediate emergency power (PIU or OEIcont) of said at least one engine (12):
- firstly, a plurality of results that correspond to said collective-pitch margin of the blades (16) of said rotor (17) for a plurality of rotational speed (NR) values of said rotor (17), said plurality of rotational speed (NR) values of said rotor (17) forming a predetermined range (22, 22') of rotational speed (NR) values of said rotor (17), and
- secondly, a plurality of collective-pitch limits obtained by adding the current collective pitch of the blades (16) of said rotor (17) to each of said results from said plurality of results,
• said display means (18) showing at least one plane curve (23-26, 23'-26') that corresponds to said at least one of said operating speeds which correspond to said maximum power at take-off (PMD), said maximum continuous power (PMC), said maximum transitional power (PMT), said super-emergency power (PSU or OEI30"), said maximum emergency power (PMU or OEI2') and said intermediate emergency power (PIU or OEIcont) of said at least one engine (12), said at least one plane curve (23-26, 23'-26') representing said plurality of collective-pitch limits on said predetermined range (22, 22') of rotational speed (NR) values of said rotor (17), said at least one plane curve (23-26, 23'-26') being formed by a set of points showing, on an X axis, the rotational speed (NR) of said rotor (17) and, on a Y axis, a corresponding collective-pitch limit, each of said at least one plane curves (23-26, 23'-26') being movable at least along a Y axis relative to said scale (27, 27') that is graduated in collective-pitch equivalents and/or relative to said index (21, 21') that represents a current collective pitch of the blades (16) of said rotor (17).

2. Device according to claim 1, **characterised in that** said at least two separate operating parameters are selected from among the group comprising at least one rotational speed of a gas generator (NG) of said engine (12), a first torque (TQ1) measured at the engine (12), a second torque (TQ2) measured at an input of said main power gearbox (BTP; 13) and a gas ejection temperature T4 measured at the input of a free turbine of the engine (12).

3. Device according to either claim 1 or claim 2, **characterised in that** said predetermined range (22, 22') of rotational speed (NR) values is expressed as a percentage of a nominal value (NRnom) of the rotational speed (NR).

4. Device according to claim 3, **characterised in that** said predetermined range (22, 22') of rotational speed (NR) values extends between a minimum speed (NRmin) that corresponds to 70% of said nominal value (NRnom) of the rotational speed (NR) and a maximum speed (NRmax) that corresponds to 130% of said nominal value (NRnom) of the rotational speed (NR).

5. Device according to any of claims 1 to 4, **characterised in that** said index (21) that represents said current collective pitch is movable along an X axis relative to said scale (27) that is graduated in collective-pitch equivalents and/or relative to said at least one plane curve (23-26).

6. Device according to any of claims 1 to 5, **characterised in that** each of said at least one plane curves (23'-26') is movable both along said Y axis and along an X axis relative to said scale (27') that is graduated in collective-pitch equivalents and/or relative to said index (21') that represents said current collective pitch of the blades (16) of said rotor (17).

7. Device according to any of claims 1 to 6, **characterised in that** said at least one plane curve (23-26, 23'-26') represents an increasing function.

8. Device according to any of claims 1 to 7, **characterised in that** said display means (18) show at least two plane curves (23-26, 23'-26') that correspond to two of said operating speeds which correspond to said maximum power at take-off (PMD), said maximum continuous power (PMC), said maximum transitional power (PMT), said super-emergency power (PSU or OEI30"), said maximum emergency power (PMU or OEI2') and said intermediate emergency power (PIU or OEIcont) of said at least one engine (12), said at least two plane curves (23-26, 23'-26') representing at least two different pluralities of collective-pitch limits on said predetermined range (22, 22') of rotational speed (NR) values of said rotor (17), said at least two plane curves (23-26, 23'-26') being mutually parallel.

9. Rotorcraft (11) comprising at least one engine (12) and a main power gearbox (BTP; 13) for rotating at least one main rotor (17), **characterised in that** said rotorcraft (11) comprises a power margin indicator device (IPL; 10) according to any of claims 1 to 8.

10. Method (30) for providing, to a pilot of a rotorcraft (11), information on the available power margin for least one engine (12) and a main power gearbox (BTP; 13) of said rotorcraft (11) depending on flight conditions, said method (30) comprising:
• a collection step (31) for collecting input data that correspond to at least two separate operating parameters of said at least one engine (12) and of said main power gearbox (BTP; 13),
• a calculation step (32) for calculating at least two power margins on the basis of respective values of said at least two operating parameters and limit values for at least one of the operating speeds that correspond to a maximum power at take-off (PMD), a maximum continuous power (PMC), a maximum transitional power (PMT), a super-emergency power (PSU or OEI30"), a maximum emergency power (PMU or OEI2') and an intermediate emergency power (PIU or OEIcont) of said at least one engine (12),
• a comparison step (33) for comparing said at least two power margins and identifying a limit power margin as the smallest of said at least two power margins,
• a conversion step (34) for converting said limit power margin into a collective-pitch margin of the blades (16) of a rotor (17) of said rotorcraft (11),
• a display step (35) for showing, on a viewing screen (19), said collective-pitch margin represented on a scale that is graduated in collective-pitch equivalents in a window (20, 20') of said viewing screen (19) and an index (21, 21') that represents a current collective pitch of the blades (16) of said rotor (17),
said method (30) being **characterised in that**:
• said calculation (32), comparison (33) and conversion (34) steps make it possible to simultaneously determine, for at least one of said operating speeds that correspond to said maximum power at take-off (PMD), said maximum continuous power (PMC), said maximum transitional power (PMT), said super-emergency power (PSU or OEI30"), said maximum emergency power (PMU or OEI2') and said intermediate emergency power (PIU or OEIcont) of said at least one engine (12):
- firstly, a plurality of results that correspond to said collective-pitch margin of the blades (16) of said rotor (17) for a plurality of rotational speed (NR) values of said rotor (17), said plurality of rotational speed (NR) values of said rotor (17) forming a predetermined range (22, 22') of rotational speed (NR) values of said rotor (17), and
- secondly, a plurality of collective-pitch limits obtained by adding the current collective pitch of the blades (16) of said rotor (17) to each of said results from said plurality of results,
• said display step (35) shows at least one plane curve (23-26, 23'-26') that corresponds to said at least one of said operating speeds which correspond to said maximum power at take-off (PMD), said maximum continuous power (PMC), said maximum transitional power (PMT), said super-emergency power (PSU or OEI30"), said maximum emergency power (PMU or OEI2') and said intermediate emergency power (PIU or OEIcont) of said at least one engine (12), said at least one plane curve (23-26, 23'-26') representing said plurality of collective-pitch limits on said predetermined range (22, 22') of rotational speed (NR) values of said rotor (17), said at least one plane curve (23-26, 23'-26') being formed by a set of points showing, on an X axis, the rotational speed (NR) of said rotor (17) and, on a Y axis, a corresponding collective-pitch limit, each of said at least one plane curves (23-26, 23'-26') being movable at least along a Y axis relative to said scale (27, 27') that is graduated in collective-pitch equivalents and/or relative to said index (21, 21') that represents a current collective pitch of the blades (16) of said rotor (17).

11. Method according to claim 10, **characterised in that** said predetermined range (22, 22') of rotational speed (NR) values is expressed as a percentage of a nominal value (NRnom) of the rotational speed (NR).

12. Method according to either claim 10 or claim 11, **characterised in that** said predetermined range (22, 22') of rotational speed (NR) values extends between a minimum speed (NRmin) that corresponds to 70% of said nominal value (NRnom) of the rotational speed (NR) and a maximum speed (NRmax) that corresponds to 130% of said nominal value (NRnom) of the rotational speed (NR).

13. Method according to any of claims 10 to 12, **characterised in that** said index (21) that represents said current collective pitch is movable along an X axis relative to said scale (27) that is graduated in collective-pitch equivalents and/or relative to said at least one plane curve (23-26).

14. Method according to any of claims 10 to 12, **characterised in that** each of said at least one plane curves (23'-26') is movable both along said Y axis and along an X axis relative to said scale (27') that is graduated in collective-pitch equivalents and/or relative to said index (21') that represents said current collective pitch of the blades (16) of said rotor (17).

15. Method according to any of claims 10 to 14, **characterised in that** said at least one plane curve (23-26, 23'-26') represents an increasing function.

16. Method according to any of claims 10 to 15, **characterised in that** said display step (35) shows at least two plane curves (23-26, 23'-26') that correspond to two of said operating speeds which correspond to said maximum power at take-off (PMD), said maximum continuous power (PMC), said maximum transitional power (PMT), said super-emergency power (PSU or OEI30"), said maximum emergency power (PMU or OEI2') and said intermediate emergency power (PIU or OEIcont) of said at least one engine (12), said at least two plane curves (23-26, 23'-26') representing at least two different pluralities of collective-pitch limits on said predetermined range (22, 22') of rotational speed (NR) values of said rotor (17), said at least two plane curves (23-26, 23'-26') being mutually parallel.
